**Europäisches Patentamt**

**European Patent Office**

**Office européen des brevets**

(11) Veröffentlichungsnummer: **0 097 875**

**A2**

(12) **EUROPÄISCHE PATENTANMELDUNG**

(21) Anmeldenummer: **83105872.2**

(22) Anmeldetag: **15.06.83**

(51) Int. Cl.³: **H 02 K 23/04**
**H 02 K 1/18**

(30) Priorität: **30.06.82 DE 3224414**

(43) Veröffentlichungstag der Anmeldung:
**11.01.84 Patentblatt 84/2**

(84) Benannte Vertragsstaaten:
**DE FR GB IT**

(71) Anmelder: **SIEMENS AKTIENGESELLSCHAFT**
**Berlin und München Wittelsbacherplatz 2**
**D-8000 München 2(DE)**

(72) Erfinder: **Feineis, Manfred**
**Jägerstrasse 2**
**D-8702 Waldbüttelbrunn(DE)**

(54) **Ständer für eine dauermagneterregte elektrische Maschine und Verfahren zu dessen Herstellung.**

(57) Die Erfindung bezieht sich auf einen Ständer für eine dauermagneterregte elektrische Maschine, dessen Dauermagnetschalen (6, 7) durch elastische Klemmstücke nach radial außen gegen die Innenwandung ihres Ständer- bzw. Rückschlußgehäuses (1) gepreßt sind; zur fertigungs- und insbesondere montagetechnischen Vereinfachung eines derartigen Ständers wird erfindungsgemäß vorgeschlagen, daß als Klemmstücke elastische Formstücke (2,3,4,5) zwischen die Magnetschalen (6, 7) und die Lagerschilde (11, 12) zwischengelegt sind, derart daß die Magnetschalen durch den axialen Druck der stirnseitig gegen das Ständer- bzw. Rückschlußgehäuse (1) montierten Lagerschilde (11, 12) mittel- bzw. unmittelbar über die elastischen Formstücke (2,3,4,5) radial und axial gegenüber dem Ständer- bzw. Rückschlußgehäuse (1) fixiert sind. Bei der Montage werden in den nach Anbrigen des einen Lagerschildes (11) gebildeten Gehäusetopf nacheinander das eine Formstück (2,3), der Läufer (8) mit den Magnetschalen (6,7) und anschließend das zweite Formstücke (4, 5) eingelegt und durch Festziehen des zweiten Lagerschildes (12) am Ständer- bzw. Rückschlußgehäuse (1) die Magnetschalen (6, 7) axial und radial fixiert.
Eine Anwendung eignet sich insbesondere für permanenterregte Kommutator-Kleinmotoren.

FIG 1

EP 0 097 875 A2

SIEMENS AKTIENGESELLSCHAFT

Berlin und München

Unser Zeichen

VPA 82 P 3 1 8 3 E

Ständer für eine dauermagneterregte elektrische Maschine
und Verfahren zu dessen Herstellung

Die Erfindung bezieht sich auf einen Ständer für eine
dauermagneterregte elektrische Maschine und ein Verfahren zu
dessen Herstellung gemäß Oberbegriff des Patentanspruchs 1;
ein derartiger Ständer ist aus der DE-OS 16 13 404 bekannt.

Bei dem bekannten Ständer werden die Magnetschalen radial
und axial durch am Innenumfang des Ständer- bzw. Rückschlußgehäuses befestigte gezahnte Federbleche gehalten. Dazu
sind die Federbleche in Umfangsrichtung zwischen den Magnetschalen am Ständer- bzw. Rückschlußgehäuse befestigt und
drücken mit ihren federnden Schenkeln in tangentialer Richtung gegen die Längsstirnflächen der Magnetschalen; außerdem ist vorgesehen, gegebenenfalls die Federenden derart
umzubiegen, daß die Magnetschalen zusätzlich auch in
axialer Richtung gesichert werden können.

Aufgabe der vorliegenden Erfindung ist die fertigungs-,
insbesondere montagetechnische Vereinfachung eines Ständers für eine dauermagneterregte elektrische Maschine,
dessen Dauermagnetschalen durch elastische Klemmstücke
gegenüber an der Innenwandung ihres Ständer- bzw. Rückschlußgehäuses fixiert sind.

Die Aufgabe wird bei einem Ständer der eingangs genannten
Art durch die kennzeichnende Lehre des Patentanspruchs 1
gelöst; vorteilhafte Ausgestaltungen der Erfindung sind jeweils Gegenstand der Unteransprüche.

Bk 2 Bih / 24.06.1982

Bei der erfindungsgemäßen Konstruktion eines Ständers für eine dauermagneterregte elektrische Maschine erübrigen sich gesonderte Montagevorgänge zur Fixierung der Dauermagnetschalen im zugehörigen Ständer- bzw. Rückschlußgehäuse, da die Dauermagnetschalen beim Festziehen der Lagerschilde über die speziellen, nicht gesondert am Innenumfang des Ständer- bzw. Rückschlußgehäuses zu befestigenden Formstücke gleichzeitig mitfixiert werden können.

Das einfache Verfahren zur Herstellung bzw. Montage eines Ständers, beispielsweise für einen dauermagneterregten Kommutatormotor mit einer die Bürsten haltenden Bürstenbrücke, ist in vorteilhafter Weise lediglich durch folgende aufeinanderfolgenden Montageschritte gekennzeichnet: Befestigen des einen, insbesondere des BS-seitigen, Lagerschildes mit montiertem Lager an der einen Stirnseite des Ständer- bzw. Rückschlußgehäuses, axiales Einlegen des einen Formstückes in den derart entstandenen Gehäusetopf von dessen noch offener Stirnseite her, axiales Einsetzen des Läufers und der Magnetschalen von der noch offenen Stirnseite her, axiales Einlegen des anderen Formstückes von der noch offenen Stirnseite her, axiales Einsetzen der Bürstenbrücke von der noch offenen Stirnseite her, Anlegen und Befestigen, insbesondere Festschrauben, des anderen Lagerschildes mit montiertem Lager und dabei Fixieren der Magnetschalen durch den von den am Ständer- bzw. Rückschlußgehäuse befestigten Lagerschilden über die Formstücke bzw. die Bürstenbrücke ausgeübten Druck. Auf diese Art und Weise werden die Magnetschalen durch die montierten Lagerschilde über die beidseitig gegengedrückten Formstücken nicht nur radial sondern auch axial fixiert.

Da bei dem erfindungsgemäßen Ständer in Umfangsrichtung zwischen den Magnetschalen zu befestigende und gegen die Längsstirnflächen der Magnetschalen andrückende Klemmstücke entfallen, ist nach einer vorteilhaften Ausgestaltung der Erfindung bei dem Ständer für eine mit einer
Schränkung versehene elektrische Maschine vorgesehen, die
Schränkung aus dem Läufer in den Ständer zu verlegen, derart daß die - in Umfangsrichtung gesehen - in Abstand
einander gegenüberliegenden Längsstirnflächen der durch
die axial endseitig anliegenden Formstücke fixierten
Schalenmagnete in schrägem Winkel (Schränkung) zu der
Längsachsenrichtung des Ständer- bzw. Rückschlußgehäuses
verlaufen.

Durch den Fortfall von Magnetschalen-Befestigungsmitteln
tangential zwischen den Längsstirnflächen der Magnetschalen ergibt sich weiterhin der Vorteil einer Vergrößerung
des Polüberdeckungswinkels, der nun nicht mehr durch eine
bestimmte Magnetschalen-Befestigungskonstruktion sondern
allein durch die Möglichkeiten der Sinterfertigungstechnik
bei der Herstellung der Magnetschalen begrenzt ist.

Zur besonders einfachen Kraftumlenkung der axial wirkenden Andruckkräfte der Lagerschilde zur radialen Fixierung
der Magnetschalen an der Innenwandung des Ständer- bzw.
Rückschlußgehäuses sind die Magnetschalen stirnseitig mit
von radial innen nach radial außen querschnittsvergrößernden Anschrägungen versehen, gegen welche die Formstücke
durch die montierten Lagerschilde angedrückt sind, wobei
die Formstücke zweckmäßigerweise zumindest im Bereich der
Andruckpunkte an die Magnetschalen mit zu den der Magnetschalen korrespondierenden, insbesondere ebenfalls angeschrägten, Anlageflächen versehen sind.

Um einerseits bei der Montage und im Betrieb eine sichere
Lage der Formstücke sicherstellen und andererseits trotz
Fertigungstoleranzen die gewünschte Fixierung der Magnetschalen im Ständer- bzw. Rückschlußgehäuse gewährleisten
zu können, ist nach einer weiteren Ausgestaltung der Erfindung vorgesehen, daß die Formstücke aus einem steifen, vor-

zugsweise kreisringförmigen Rahmenteil und aus daran angeformten elastischen Andruckstücken besteht, über die die Formstücke an die Magnetschalen angrückt sind. Falls die Lagerschilde aus einem Spritzgußteil, insbesondere einem Kunststoff-Spritzgußteil, gefertigt sind, wird zweckmäßigerweise ein einstückiges, sowohl die Formstücke mit ihren elastischen Andruckstücken als auch die Lagerschilde selbst umfaßendes Bauteil vorgesehen.

Eine besonders kleinbauende Ausführung eines erfindungsgemäßen Ständers für eine dauermagneterregte elektrische Maschine ergibt sich dadurch, daß die Formstücke im fertigmontierten Zustand der elektrischen Maschine jeweils innerhalb des radialen Freiraums zwischen der Innenwandung des Ständer- bzw. Rückschlußgehäuses und dem Wickelkopf der Wicklung des Läufers angeordnet sind.

Die Erfindung sowie weitere vorteilhafte Ausgestaltungen werden im folgenden anhand eines Ausführungsbeispiels in der Zeichnung näher erläutert. Darin zeigen:

Fig. 1 einen Längsschnitt durch einen dauermagneterregten Kommutatormotor mit zwei Magnetschalen,
Fig. 2 die Ausführung und Anordnung der zwei Magnetschalen relativ zur Längsachsenrichtung des Motors bei einem geschränkten Kommutatormotor,
Fig. 3 eine Schnittansicht des Kommutatormotors aus Fig.1 gemäß Schnittverlauf III-III,
Fig. 4, 6 jeweils eine stirnseitige Draufsicht auf eine erste und auf eine zweite Ausführung eines Formstückes,
Fig. 5, 7 ein Schnittbild des Formstückes aus Fig. 4 bzw.6 gemäß Schnittverlauf V-V bzw. VII-VII.

In einem gleichzeitig dem magnetischen Rückschluß dienenden Ständergehäuse 1 sind an dessen Innenwandung zwei Magnetschalen 6, 7 fixiert. Endseitig ist das Ständergehäuse 1 durch jeweils ein Lagerschild 11 an der rechten Seite bzw. ein Lagerschild 12 an der linken Seite abgeschlossen. Der rechte Lagerschild 11 besteht aus einem Blechformteil und ist mit dem Ständergehäuse 1 verstemmt, derart daß sich ein Gehäusetopf ergibt, in den die weiteren Montageteile vom linken offenen Ende her einsteckbar sind. Der linke Lagerschild 12 besteht aus einem Gußteil, an den in hier nicht dargestellter Weise ein Getriebegehäuse angekoppelt ist. Die Befestigung zwischen dem Ständergehäuse 1 und dem linken Lagerschild 12 erfolgt über Blechlaschen 15, 16, die mit ihrem einen Ende in Schlitzöffnungen des Ständergehäuses einsteckbar und mit ihrem anderen, aus den schlitzförmigen Öffnungen herausragenden Ende im Sinne einer axialen Festspannung des Ständergehäuses 1 gegen den Lagerschild 12 in diesen über die Schrauben 17, 18 einschraubbar sind.

In den Lagerschilden 11 bzw. 12 sind Lager 13 bzw. 14 gehalten, in denen die Welle 81 des Läufers 8 drehbar gelagert ist und die mit ihrem linken freien Wellenende in das hier nicht dargestellte, an den linken Lagerschild 12 angekoppelte Getriebegehäuse hineinragt. Konzentrisch zur Welle 81 des Läufers 8 ist am rechten Ende der Welle 81 das Läuferblechpaket 82 und am linken Ende der Welle 81 ein Kommutator 85 gehaltert. Das Blechpaket 82 nimmt eine Läuferwicklung auf, deren Wickelköpfe 83, 84 stirnseitig über das Blechpaket 82 des Läufers 8 hinausragen. Der Kommutator 85 wird von Kohlebürsten 91, 92 kontaktiert, die in einer Bürstenbrücke bzw. Bürstentragplatte 9 gelagert sind. Die Bürstentragplatte 9 liegt im fertigmontierten Zustand des Kommutatormotors einerseits an der linken Stirnseite an einem axial vorstehenden Kragen des Lager-childes 12 fest an und ist andererseits über angeformte Druckarme 93, 94 an das linke Formstück 4 bzw. 5
fest angepreßt.

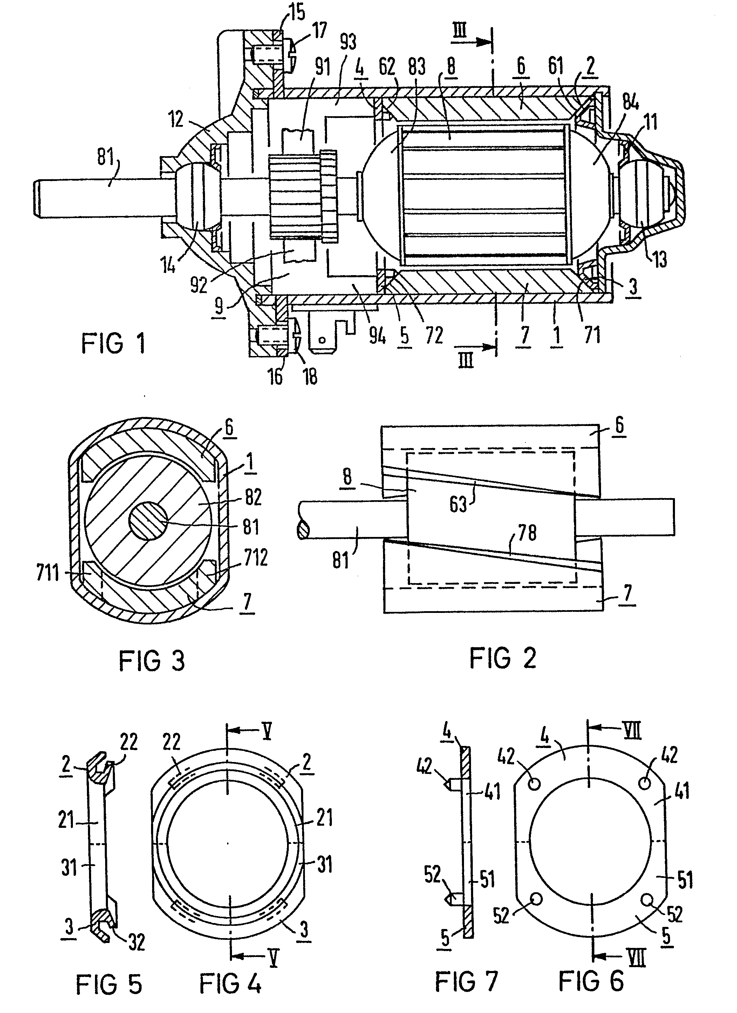

Zur radialen und axialen Fixierung der Magnetschalen 6, 7
sind deren Stirnseiten mit von radial innen nach radial
außen querschnittsvergrößernden Anschrägungen 61; 62 bzw.
71; 72 versehen. Gegen diese Anschrägungen der Magnetschalen liegen am jeden Ende stirnseitig je ein Formstück
2, 3 bzw. 4, 5 mit zu den Ansschrägungen der Magnetschalen
korrespondierenden, insbesondere angeschrägten Anlageflächen an. Fig. 1 zeigt im gleichen Bild zwei alternative Ausführungsformen von Formstücken, und zwar eine
erste Ausführung am rechten und eine zweite Ausführung am
linken Ende des Ständergehäuses 1. Jeweils in Draufsicht
bzw. Schnittbild ist die erste Ausführung in Fig. 4, 5
und die zweite Ausführung in Fig. 6, 7 dargestellt. Die
beiden in Fig. 4, 5 bzw. 6, 7 dargestellten Gesamt-Formstücke 2, 3 bzw. 4, 5 jeweils eines Endes können von vornherein als einstückiges Bauteil oder z.B. aus fertigungstechnischen Gründen zunächst als hälftige Einzelteile
getrennt hergestellt und anschließend miteinander verbunden, z.B. zusammengesteckt sein.

Wie insbes. aus Fig. 4, 5 ersichtlich, bestehen die Gesamt-Formstücke 2, 3 bzw. 4, 5 jeweils aus steifen, vorzugsweise bis auf die seitlichen Abflachungen (halb-) kreisringförmigen Rahmenteilen 21;31 bzw.41;51 und daran angeformten elastischen Andruckstücken 22;32 bzw.42;52, über
die die Formstücke an die Magnetschalen 6, 7 axial stirnseitig an beiden Enden angedrückt sind. Bei der Ausführung
eines Formstückes gemäß Fig. 4, 5 bestehen die einstückig
mit den steifen Rahmenteilen 21;31 hergestellten elastischen
Andruckstücke 22;32 aus gabelförmigen Endstücken mit federnden, als Anlage zwischen Magnetschale und Lagerschild dienenden Gabelzinken und bei der Ausführung gemäß Fig. 6, 7 aus
in Abstand zueinander angeordneten axial vorstehenden stiftförmigen Andruckstücken 42, 52. Die seitlichen, dem Ständergehäuse angepaßten Abflachungen dienen gleichzeitig der formschlüssigen tangentialen Fixierung der Formstücke. Wie insbes. aus Fig. 1 ersichtlich, sind die Formstücke im fertigmontierten Zustand der elektrischen Maschine jeweils innerhalb des radialen Freiraums zwischen der Innenwandung des Ständergehäuses 1 und dem jeweiligen Wickelkopf 83 bzw. 84 der Wicklung des Läufers 8 angeordnet, derart daß kein zusätzlicher axialer Einbauraum für die Formstücke 2, 3 bzw. 4, 5 benötigt wird.

Ein vorteilhaftes Verfahren zur Herstellung eines Ständers für den im Ausführungsbeispiel dargestellten dauermagneterregten Kommutator mit einer die Bürsten 91, 92 haltenden Bürstentragplatte 9 ist durch folgende aufeinanderfolgenden Montageschritte gekennzeichnet:

a) Befestigen des Lagerschildes 11 mit montiertem Lager 13 an der rechten Stirnseite des Ständergehäuses 1,

b) axiales Einlegen des einen Formstückes 2, 3 in den derart entstandenen, vorzugsweise bei der Montage hochkant gestellten Gehäusetopfes von dessen noch offener, dann oberer Stirnseite her,

c) axiales Einsetzen des Läufers 8 und der Magnetschalen 6, 7 von der noch offenen, oberen Stirnseite des Gehäusetopfes her,

d) axiales Einlegen des anderen Formstückes 4, 5 von der noch offenen, oberen Stirnseite des Gehäusetopfes her,

e) axiales Einsetzen der Bürstenbrücke 9 mit den darin gehalterten Bürsten 91, 92 von der noch offenen, oberen Stirnseite des Gehäusetopfes her und Anlegen und Befestigen des anderen Lagerschildes 12 mit montiertem Lager 14 durch Anziehen der Schrauben 17, 18 und Festziehen des Ständergehäuses 1 über die Laschen 15, 16 gegen den Lagerschild 12, wobei durch den axialen, zwischen den beiden Lagerschilden ausgeübten Druck die Magnetschalen 6, 7 über die Formstücke und die Bürstentragplatte mit ihren verlängerten Druckarmen 93, 94 fixiert werden.

Patentansprüche

1.Ständer für eine dauermagneterregte elektrische Maschine, dessen Dauermagnetschalen durch elastische Klemmstücke nach radial außen gegen die Innenwandung ihres Ständer- bzw. Rückschlußgehäuses gepreßt sind, d a d u r c h g e k e n n z e i c h n e t , daß als Klemmstücke elastische Formstücke (2, 3 bzw. 4, 5) zwischen die Magnetschalen (6; 7) durch den axialen Druck der stirnseitig gegen das Ständer- bzw. Rückschlußgehäuse (1) montierten Lagerschilde (11; 12) mittel- bzw. unmittelbar über die elastischen Formstücke (2, 3 bzw. 4, 5) radial gegen die Innenwandung des Ständer- bzw. Rückschlußgehäuses (1) gedrückt sind.

2. Ständer nach Anspruch 1, d a d u r c h g e - k e n n z e i c h n e t , daß die Magnetschalen (6; 7) über die durch die montierten Lagerschilde (11; 12) gegengedrückten Formstücke (2, 3 bzw. 4, 5) auch axial fixiert sind.

3. Ständer nach Anspruch 1 oder 2, d a d u r c h g e k e n n z e i c h n e t , daß die Magnetschalen (6; 7) stirnseitig mit von radial innen nach radial außen querschnittsvergrößernden Anschrägungen (61, 62 bzw. 71, 72) versehen sind, gegen welche die Formstücke (2, 3 bzw. 4, 5) durch die montierten Lagerschilde (11; 12) angedrückt sind.

4. Ständer nach einem der Ansprüche 1 bis 3, d a - d u r c h g e k e n n z e i c h n e t , daß die Formstücke (2, 3 bzw. 4, 5) zumindest im Bereich ihrer Andruckpunkte an die Magnetschalen (6;7) mit korrespondierenden, insbesondere angeschrägten, Anlageflächen versehen sind.

5. Ständer nach einem der Ansprüche 1 bis 4, d a - d u r c h  g e k e n n z e i c h n e t , daß die Form- stücke (2, 3 bzw. 4, 5) aus einem steifen Rahmenteil (21 bzw. 41) und daran angeformten elastischen Andruckstücken bestehen, über die die Formstücke (2, 3 bzw. 4, 5) an die Magnetschalen angedrückt sind.

6, Ständer nach einem der Ansprüche 1 bis 5, d a - d u r c h  g e k e n n z e i c h n e t , daß die Formstücke (2, 3 bzw. 4, 5) einstückig mit den Lagerschilden (11; 12) ausgebildet sind.

7. Ständer nach einem der Ansprüche 1 bis 6, d a - d u r c h  g e k e n n z e i c h n e t , daß die Formstücke (2, 3 bzw. 4, 5) im fertigmontierten Zustand der elektrischen Maschine jeweils innerhalb des radialen Freiraums zwischen der Innenwandung des Ständers- bzw. Rückschlußgehäuses und dem Wickelkopf (83 bzw. 84) der Wicklung des Läufers (2) angeordnet sind.

8. Ständer für eine dauermagneterregte elektrische, mit einer Schränkung versehene elektrische Maschine nach einem der Ansprüche 1 bis 7, d a d u r c h  g e k e n n - z e i c h n e t , daß die - in Umfangsrichtung gesehen - in Abstand einander gegenüberliegenden Längsstirnflächen (63; 73) der durch die axial endseitig anliegenden Formstücke (2; 3; 4; 5) fixierten Schalenmagnete (6; 7) in schrägem Winkel (Schränkung) zu der Längsachsenrichtung des Ständer- bzw. Rückschlußgehäuses (1) verlaufen (Fig.2).

9. Verfahren zur Herstellung eines Ständers für eine dauermagneterregte elektrische Maschine, insbesondere einen Kommutatormotor mit einer die Bürsten haltenden Bürstenbrücke, nach einem der Ansprüche 1 bis 8, g e k e n n z e i c h n e t durch folgende aufeinanderfolgende Montageschritte:

a) Befestigen des einen, insbesondere des BS-seitigen, Lagerschildes mit montiertem Lager an der einen Stirnseite des Ständer- bzw. Rückschlußgehäuses,

b) axiales Einlegen des einen Formstückes in den derart entstandenen Gehäusetopf von dessen noch offener Stirnseite her,

c) axiales Einsetzen des Läufers und der Magnetschalen von der noch offenen Stirnseite her,

d) axiales Einlegen des anderen Formstückes von der noch offenen Stirnseite her,

e) axiales Einsetzen der Bürstenbrücke von der noch offenen Stirnseite her,

f) Anlegen und Befestigen, insbesondere Festschrauben, des anderen, insbesondere AS-seitign, Lagerschildes mit montiertem Lager und dabei Fixieren der Magnetschalen durch den von den am Ständer- bzw. Rückschlußgehäuse befestigten Lagerschilden über die Formstücke bzw. die Bürstenbrücke ausgeübten Druck.

FIG 1

FIG 3

FIG 2

FIG 5 FIG 4

FIG 7 FIG 6